# EUROPÄISCHE PATENTSCHRIFT

(11) **EP 3 046 718 B1**
(45) Veröffentlichungstag und Bekanntmachung des Hinweises auf die Patenterteilung: **26.08.2020**
(21) Anmeldenummer: 14766162.3
(22) Anmeldetag: 12.09.2014
(51) Int. Cl.: B23K 26/00, B23K 26/067, B23K 26/40

(54) **VERFAHREN ZUR LASERBEARBEITUNG SOWIE BEARBEITUNGSMASCHINE**
METHOD AND DEVICE FOR LASER WORKING
MÉTHODE ET APPAREIL DE TRAVAIL AU LASER

(30) Priorität: 16.09.2013 DE 102013218483
(43) Veröffentlichungstag der Anmeldung: 27.07.2016
(73) Patentinhaber: HOMAG GmbH, 72296 Schopfloch (DE)
(72) Erfinder: COMPERA, Christian, 72296 Schopfloch (DE); FLIK, Markus, 72296 Schopfloch (DE)
(74) Vertreter: Hoffmann Eitle
(86) Internationale Anmeldenummer: PCT/EP2014/069505
(87) Internationale Veröffentlichungsnummer: WO 2015/036546

(56) Entgegenhaltungen:
- EP-A1- 1 568 438
- EP-A2- 1 800 813
- WO-A1-2012/000648
- WO-A1-2012/126688
- DE-A1- 10 352 402
- DE-A1- 19 831 890
- DE-A1-102011 000 768
- GB-A- 2 151 808
- US-A- 4 945 489

## Beschreibung

### Technisches Gebiet

Die vorliegende Erfindung betrifft ein Verfahren zur Laserbearbeitung sowie eine Bearbeitungsmaschine zur Bearbeitung von Werkstücken, die bevorzugt aus Holz, Holzwerkstoffen oder einer Kombination hiervon bestehen.

### Stand der Technik

Das Bearbeiten von Werkstücken aus Holz oder holzähnlichen Werkstoffen wird üblicherweise mittels CNC-Bearbeitungsmaschinen mit spanabnehmenden Werkzeugen durchgeführt. Dabei sind Schnittgeschwindigkeiten von bis zu 20 m/Minute üblich.

Ferner sind Bearbeitungsmaschinen bekannt, die zur Bearbeitung von Werkstücken ein oder mehrere Laseraggregate aufweisen.

Beispielsweise betrifft die EP 1 790 447 A1 ein Verfahren sowie eine Vorrichtung zum Bearbeiten von plattenförmigen Werkstücken, welche Werkstücke eine erste Schicht aufweisen, die bevorzugt im Wesentlichen aus Holz, Holzwerkstoffen oder dergleichen besteht, sowie eine zweite Schicht, die härter ist als die erste Schicht. Gemäß diesem Verfahren wird zunächst die zweite Schicht mittels eines Lasers abgetragen, wobei der mindestens eine Laser und die plattenförmigen Werkstücke relativ zueinander bewegt werden. Anschließend wird mindestens ein Abschnitt der ersten Schicht mittels eines spanabnehmenden Werkzeugs, insbesondere eines Fräsers, abgenommen, wobei der abgetragene Abschnitt der ersten Schicht benachbart zum abgetragenen Abschnitt der zweiten Schicht gelegen ist.

Ferner ist die DE 299 24 727 U1 bekannt, die eine Werkzeugmaschine für die Werkstückbearbeitung mit spanenden Werkzeugen und einem Laserstrahl zeigt. Auf dem Spindelstock ist hierbei als Laserstrahlquelle ein zur Mittelachse des Spindelstocks seitlich versetzter ND-Jack-Laser angeordnet, von dem ein dort erzeugter Laserstrahl über einen Strahlführungskanal zu einem seitlich am Fräserkopf angeordneten Laserkopf mit einem Scannersystem zur Fokussierung des Laserstrahls und dessen Führung über eine Werkstückoberfläche geleitet wird. Auf diese Weise kann beispielsweise ein schichtweiser Materialabtrag realisiert werden. Zur Durchführung einer spanenden Bearbeitung kann z.B. ein Fräs- oder Bohrwerkzeug in die Arbeitsspindel eingesetzt werden.

Aus der DE 10 2011 002 696 A1 ist eine weitere Vorrichtung bekannt, die zum Bearbeiten von beispielsweise Holzwerkstoffen betrifft, mit einer Strahlungseinrichtung zum Erzeugen und/oder Übertragen einer Strahlung und einer Spindeleinheit mit einer in einem Wellenlagerabschnitt drehbaren Welle sowie einer Aufnahme für Bearbeitungswerkzeuge und/oder Bearbeitungsaggregate. Die Welle und/oder ein an die Welle angebrachtes Aggregat weisen zumindest abschnittsweise einen Hohlraum auf, und die Strahlungseinrichtung ist derart angeordnet, dass die Strahlung zumindest abschnittsweise innerhalb des Hohlraums verläuft.

Die DE102011000768 offenbart eine Laserbearbeitungsvorrichtung mit umschaltbarer Laseranordnung und Laserbearbeitungsverfahren.

### Gegenstand der Erfindung

Ziel der vorliegenden Erfindung ist es, ein Verfahren sowie eine Bearbeitungsmaschine bereitzustellen, mit denen zur Bearbeitung von Werkstücken verwendete Laserenergie variabler eingesetzt werden kann.

Der Gegenstand des Anspruchs 1 stellt ein Verfahren bereit, das diese Anforderungen erfüllt. Weitere Ausgestaltungen sind in den abhängigen Ansprüchen aufgeführt.

Kerngedanke der vorliegenden Erfindung ist es, ein Verfahren sowie eine Bearbeitungsmaschine unter Einsatz einer Laserquelle vorzusehen, und die durch die Laserquelle bereitgestellte Energie für verschiedene Bearbeitungsvorgänge nutzbar zu machen.

Bei den genannten Bearbeitungsvorgängen kann es sich um eine abtragende bzw. trennende Bearbeitung handeln. Alternativ kann es auch vorgesehen sein, eine Haftmittelschicht eines Beschichtungsmaterials mit der durch den Laserstrahl bereitgestellten Energie zu aktivieren, oder einen Abschnitt eines Werkstücks oder eines Beschichtungsmaterials zu erwärmen. Letzteres kann zum Einsatz kommen, um die Materialeigenschaften zu ändern, und somit das Werkstück bzw. das Beschichtungsmaterial für eine nachrangige Bearbeitung vorzubereiten.

Insbesondere betrifft die vorliegende Erfindung ein Verfahren zum Bearbeiten von beispielsweise platten- oder leistenförmigen Werkstücken, die bevorzugt aus Holz, Holzwerkstoffen, Kunststoffen oder dergleichen bestehen. Das Verfahren umfasst die in Anspruch 1 genannten Schritte. Auf diese Weise wird ein Verfahren bereitgestellt, mit dem unterschiedliche Laserbearbeitungen durchgeführt werden können, ohne zusätzliche Laserquellen für verschiedene Bearbeitungsvorgänge vorzusehen. Dies erhöht die Flexibilität innerhalb eines Produktionsprozesses ohne die Kosten zu steigern.

Bevorzugt wird das erste und zweite Laserbearbeitungswerkzeug am gleichen Werkstück eingesetzt, sodass die erste Bearbeitung und die zweite Bearbeitung an diesem Werkstück durchgeführt werden. Auf diese Weise kann beispielsweise an einem Werkstück in einem ersten Schritt ein Haftmittel eines Kantenmaterials mittels Laserenergie aktiviert, und das Kantenmaterial an einer Schmalfläche dieses Werkstücks aufgeleimt werden. In einem zweiten Schritt wird dann die an einem Ende des Werkstücks überstehende Kante unter Einsatz von Laserenergie gekappt.

Das zuvor genannte Justieren der Laserleistungsdichte umfasst insbesondere ein Ändern der optischen Parameter, insbesondere Fokussieren. Demnach wird die Laserleistungsdichte im Bearbeitungsbereich auf eine bestimmte Bearbeitung abgestimmt. Beispielsweise sind bei trennenden Bearbeitungsvorgängen höhere Leistungen erforderlich als beim Aktivieren eines Haftmittels auf einem Beschichtungsmaterial.

In einer Ausführungsform der vorliegenden Erfindung wird nach Beenden der ersten Bearbeitung das erste Laserbearbeitungswerkzeug aus der Schnittstelle entnommen, und das weitere Laserbearbeitungswerkzeug in die Schnittstelle eingewechselt. Auf diese Weise kann durch die genannte Wechselbarkeit die Variabilität des Verfahrens erhöht werden, ohne separat angeordnete und ggf. getrennt bewegbare Laserbearbeitungswerkzeuge bereitzustellen.

Die vorliegende Erfindung ist ferner auf eine Bearbeitungsmaschine gerichtet, die zur Durchführung der oben genannten Verfahren geeignet ist. Dabei weist die Bearbeitungsmaschine die Merkmale gemäß Anspruch auf.

Die genannte Schnittstelle ist bevorzugt an einer Führungseinrichtung, insbesondere einem Portal oder einem Ausleger, angebracht. Demnach kann das an der Schnittstelle aufgenommene Laserbearbeitungswerkzeug verfahren werden.

Bei der Laserquelle handelt es sich bevorzugt um einen Diodenlaser, einen Faserlaser, einen Festkörperlaser oder einen Nd-YAG-Laser.

Der Laserführungspfad weist bevorzugt eine Strahlweiche und/oder Strahlteiler auf, mit der der Laserstrahl über unterschiedliche Laserführungspfad-Arme zu unterschiedlichen Schnittstellen geleitet werden kann. Auf diese Weise kann eine Laserquelle genutzt werden, um an unterschiedlichen Abschnitten einer Bearbeitungsmaschine eine Laserenergie für eine Bearbeitung bereitzustellen.

In einer bevorzugten Ausführungsform nimmt die Schnittstelle ein Laserstrahlaggregat, ein Aggregat zur Aufbereitung eines Beschichtungsmaterials, beispielsweise Aktivieren einer Haftmittelschicht eines Beschichtungsmaterials, ein Laserbohraggregat, ein Laserschweißaggregat oder ein Laserkappaggregat auf. Jedes der genannten Aggregate ist bevorzugt in die Schnittstelle einwechselbar, wodurch die Variabilität der Maschine deutlich erhöht wird.

Zusätzlich zum genannten Laserbearbeitungswerkzeug kann die Bearbeitungsmaschine ein spanend bearbeitendes Werkzeug, insbesondere einen Fräser oder Bohrer, in einem Aggregat umfassen. Dieser kann bei der Bearbeitung eines Werkstücks in den Bearbeitungsvorgang mit dem Laserbearbeitungswerkzeug integriert werden, so dass die Bearbeitungsmöglichkeiten der Bearbeitungsmaschine erhöht werden.

Die Werkstückauflage umfasst in einer Ausführungsform der vorliegenden Erfindung Vakuumsauger, um ein Werkstück halten zu können. In anderen Varianten der vorliegenden Erfindung ist ein Band- oder Rollenförderer vorgesehen, um eine Relativbewegung zwischen dem Laserbearbeitungswerkzeug und dem Werkstück zu erreichen.

Zusätzlich zu den Laserbearbeitungswerkzeugen kann eine weitere Energiequelle vorgesehen sein, die ausgewählt ist aus der Gruppe bestehend aus Laser, Infrarotquelle, Ultraschallquelle, Magnetfeldquelle, Mikrowellenquelle, Plasmaquelle, und Begasungsquelle. Diese Energiequelle kann mit den Laserbearbeitungswerkzeugen zusammenwirken, oder den mit diesen zu bearbeitenden Bereich vor- oder nachbehandeln. Im Falle des Vorbehandelns wird der mit den Laserbearbeitungswerkzeugen zu bearbeitende Bereich bspw. vorgewärmt. Bei der Nachbehandlung kann eine Temperatur nach der Bearbeitung durch die Laserbearbeitungswerkzeuge gezielt eingestellt und über einen definierten Bereich gehalten werden.

### Kurze Beschreibung der Zeichnungen

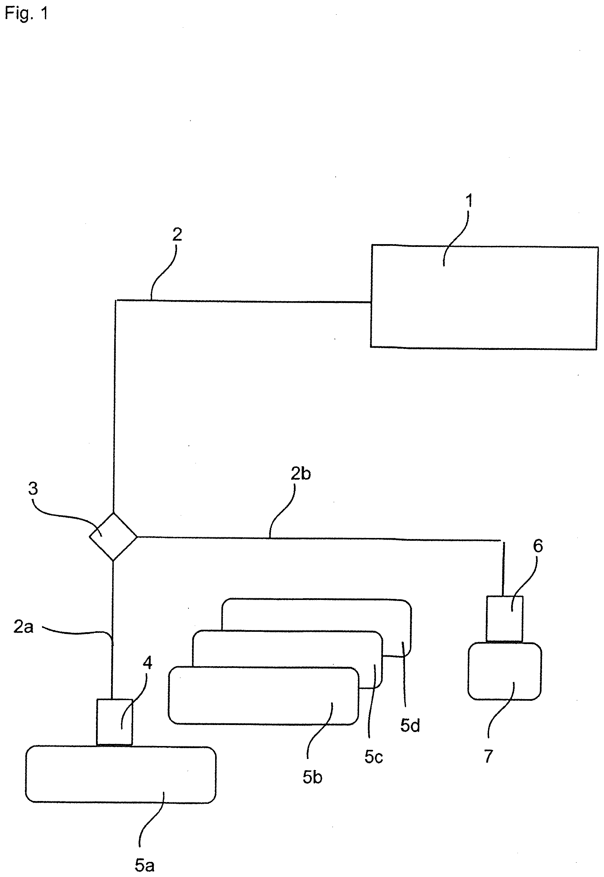

- Fig. 1: zeigt eine schematische Ansicht einer Ausführungsform der erfindungsgemäßen Bearbeitungsmaschine.

### Bevorzugte Ausführungsformen

Die Bearbeitungsmaschine umfasst eine Laserquelle 1, die eine Laserenergie über einen Laserführungspfad 2 leitet. Im Bereich des Laserführungspfades 2 ist eine Strahlweiche 3 vorgesehen, mit der der Laserstrahl in einen ersten Laserführungspfad-Arm 2a oder einen zweiten Laserführungspfad-Arm gelenkt werden kann.

Der erste Laserführungspfad-Arm 2a ist mit einer Schnittstelle 4 verbunden, an der ein Laserbearbeitungswerkzeug 5a aufgenommen ist. Ferner sind in Fig. 1 mehrere Laserbearbeitungswerkzeuge 5b-5d dargestellt, die in einem Wechselsystem vorgehalten werden und in die Schnittstelle 4 eingewechselt werden können.

Im Bereich der Bearbeitungsmaschine ist eine zweite Schnittstelle 6 vorgesehen, die ausgehend von der Strahlweiche 3 über den zweiten Laserführungspfad-Arm 2b mit der Energie des in der Laserquelle 1 hergestellten Laserstrahls versorgt wird. In der Schnittstelle 6 ist ein weiteres Laserbearbeitungswerkzeug 7 aufgenommen.

Somit kann mit der gezeigten Bearbeitungsmaschine eine erste Bearbeitung mit dem Laserbearbeitungswerkzeug 5a durchgeführt werden. Anschließend wird das Laserbearbeitungswerkzeug 5a aus der Schnittstelle 4 entnommen, und durch ein anderes Laserbearbeitungswerkzeug 5b-5d ersetzt. Da das Laserbearbeitungswerkzeug 5b-5d eine gegenüber dem Laserbearbeitungswerkzeug 5a andere Bearbeitung durchführt, wird vor dessen Einsatz die Laserleistungsdichte justiert, insbesondere geändert. Nachfolgend wird eine zweite Bearbeitung mit dem Laserbearbeitungswerkzeug 5b-5d durchgeführt, welche zweite Bearbeitung sich von der ersten Bearbeitung unterscheidet.

Dabei kann es vorgesehen sein, dass das jeweilige Laserbearbeitungswerkzeug eine Signatur aufweist, mit der das Justieren der Laserleistungsdichte beim Einwechseln in die Schnittstelle erkannt, und durch die Bearbeitungsmaschine eingestellt wird.

Alternativ zu einem Wechsel des Laserbearbeitungswerkzeugs 5a ist es auch möglich, den Laserstrahl über die Strahlweiche 3 in den zweiten Laserführungspfad-Arm 2b zu leiten, und somit das Laserbearbeitungswerkzeug 7 mit Energie zu versorgen. Auf diese Weise kann flexibel zwischen dem Laserbearbeitungswerkzeug 5a und dem Laserbearbeitungswerkzeug 7 umgeschaltet werden. Da beide Werkzeuge üblicherweise eine unterschiedliche Bearbeitung durchführen, wird vor Einsatz des jeweils anderen Laserbearbeitungswerkzeugs die Laserleistungsdichte justiert, insbesondere geändert.

Wird ein CO2-Laser bei einer Schneidbearbeitung für eine Schneidtiefe von 3mm in einer HDF-Platte mit Schnittgeschwindigkeiten von bis zu 30 m/min, so können bei einer Laserleistung von 1500W und einem runden Spotdurchmesser auf dem Werkstück von 0,3mm (Fläche Spotbereich = 0,00071cm2) eine Laserleistungsdichte von 2.122.066 W/cm2 erreicht werden. Wird wiederum durch Einwechseln eines anderen Laserbearbeitungswerkzeuges ein rechteckiger Spotdurchmesser auf dem Werkstück von 5x15mm (Fläche Spotbereich = 0,75cm2) gewählt, so wird bei gleicher Laserleistung eine Laserleistungsdichte von 2.000W/cm2 erreicht. Diese kann beispielsweise zum Aktivieren eines Haftmittels auf einem Kantenband genutzt werden.

Im Bereich der Schnittstelle für das Laserbearbeitungswerkzeug wird eine niedrigere Laserleistungsdichte gewählt. Dies bedeutet, dass die Optik im Bereich der Schnittstelle breiter ausgelegt ist als der Laserführungspfad. Auf diese Weise wird die Schnittstelle unempfindlicher gegenüber Fremdkörpern, die sich in einer staubigen Umgebung auf dieser ablagern können.

## Patentansprüche

1. Verfahren zum Bearbeiten von insbesondere platten- oder leistenförmigen Werkstücken, die beispielsweise aus Holz, Holzwerkstoffen, Kunststoff oder dergleichen bestehen, mit einer Bearbeitungsmaschine, welches Verfahren die Schritte umfasst:
Bearbeiten eines Werkstücks mit einem in einer Schnittstelle (4) der Bearbeitungsmaschine aufgenommenen ersten Laserbearbeitungswerkzeug (5a) wobei Laserenergie von einer Laserquelle (1) der Bearbeitungsmaschine zum ersten Laserbearbeitungswerkzeug für eine erste Bearbeitung geführt wird; anschließend daran
Justieren der Laserleistungsdichte der Laserquelle (1) mittels einer Laserleistungsdichte-Einstelleinheit der Bearbeitungsmaschine für ein zweites Laserbearbeitungswerkzeug (5b-5d, 7) zur Durchführung
einer zweiten Bearbeitung, wobei das zweite Laserbearbeitungswerkzeug an die Schnittstelle (4) angeschlossen und anschließend von der Laserquelle (1) mit Laserenergie mit einer für die zweite Bearbeitung justierten Laserleistungsdichte versorgt wird,
Durchführen der zweiten Bearbeitung mit dem zweiten Laserbearbeitungswerkzeug (5b-5d, 7), wobei sich die zweite Bearbeitung von der ersten Bearbeitung unterscheidet,
wobei die erste Bearbeitung ausgewählt ist aus einer Schneidbearbeitung, einer Bohrbearbeitung, und einer Kappbearbeitung, und die zweite Bearbeitung ein Aktivieren eines Haftmittels ist.

2. Verfahren gemäß Anspruch 1, **dadurch gekennzeichnet, dass** die erste Bearbeitung und die zweite Bearbeitung an einem gleichen Werkstück durchgeführt werden.

3. Verfahren gemäß einem der vorangegangenen Ansprüche, **dadurch gekennzeichnet, dass** das Justieren der Laserleistungsdichte ein Ändern der optischen Parameter, insbesondere Fokussieren umfasst.

4. Verfahren gemäß einem der vorangegangenen Ansprüche, **dadurch gekennzeichnet, dass** nach Beenden der ersten Bearbeitung das erste Laserbearbeitungswerkzeug (5a) aus der Schnittstelle (4) entnommen, und das zweite Laserbearbeitungswerkzeug (5b-5d) in die Schnittstelle eingewechselt wird.

5. Bearbeitungsmaschine zur Durchführung des Verfahrens gemäß einem der vorangegangenen Ansprüche, wobei die Bearbeitungsmaschine aufweist:
eine Werkstückauflage zum Aufnehmen und gegebenenfalls Halten, insbesondere auch zum Transportieren von Werkstücken während der Bearbeitung,
eine Schnittstelle (4, 6), die dafür eingerichtet ist, ein erstes oder zweites Laserbearbeitungswerkzeug aufzunehmen, sowie ein daran aufgenommenes erstes oder zweites Laserbearbeitungswerkzeug,
eine Laserquelle (1) sowie einen Laserführungspfad (2) zum Führen der durch die Laserquelle bereitgestellten Laserenergie von der Laserquelle zum ersten oder zweiten Laserbearbeitungswerkzeug (5a, 7),
wobei
die Bearbeitungsmaschine eine Laserleistungsdichte-Einstelleinheit umfasst, um die zur Bearbeitung zur Verfügung stehende Laserleistungsdichte für das erste oder zweite Laserbearbeitungswerkzeug zu justieren,
wobei das erste Laserbearbeitungswerkzeug für eine Schneidbearbeitung, eine Bohrbearbeitung oder eine Kappbearbeitung eingerichtet ist, und das zweite Laserbearbeitungswerkzeug zum Aktivieren eines Haftmittels eingerichtet ist.

6. Bearbeitungsmaschine gemäß Anspruch 5, ferner umfassend eine Führungseinrichtung, insbesondere ein Portal oder einen Ausleger, wobei die Schnittstelle (4, 6) an der Führungseinrichtung, insbesondere dem Portal oder Ausleger, angebracht ist.

7. Bearbeitungsmaschine gemäß einem Ansprüche 5-6, **dadurch gekennzeichnet, dass** die Laserquelle ein Diodenlaser, Faserlaser, Festkörperlaser, insbesondere Nd-YAG-Laser oder Gas-Laser, insbesondere CO2-Laser ist.

8. Bearbeitungsmaschine gemäß einem Ansprüche 5-7, **dadurch gekennzeichnet, dass** der Laserführungspfad (2) eine Strahlweiche (3) und/oder Strahlteiler (3) aufweist, mit der der Laserstrahl über unterschiedliche Laserführungspfad-Arme (2a, 2b) zu unterschiedlichen Schnittstellen (4, 6) geleitet werden kann.

9. Bearbeitungsmaschine gemäß einem Ansprüche 5-8, **dadurch gekennzeichnet, dass** die Schnittstelle ein Laserschneidaggregat, ein Aggregat zur Aufbereitung eines Beschichtungsmaterials, ein Laserbohraggregat, ein Laserschweißaggregat oder ein Laserkappaggregat aufnimmt.

10. Bearbeitungsmaschine gemäß Anspruch 9, **dadurch gekennzeichnet, dass** das Aggregat in die Schnittstelle einwechselbar ist.

11. Bearbeitungsmaschine gemäß einem der Ansprüche 5-10,
**dadurch gekennzeichnet, dass** die Bearbeitungsmaschine ein Aggregat, insbesondere Mehrachsaggregat, mit einem spanend bearbeitenden Werkzeug umfasst, insbesondere einen Fräser oder Bohrer.

12. Bearbeitungsmaschine gemäß einem der vorangegangenen Ansprüche, **dadurch gekennzeichnet, dass** die Werkstückauflage Vakuumsauger oder einen Band - bzw. Rollenförderer umfasst.

## Claims

1. Method for processing in particular panel- or strip-formed workpieces, which consist for example of wood, wood materials, plastic or the like, with a processing machine, said method comprising the steps:
processing a workpiece with a first laser processing tool (5a) mounted in an interface (4) of the processing machine, wherein laser energy from a laser source (1) of the processing machine is passed to the first laser processing tool for a first processing; followed by
adjusting the laser power density of the laser source (1), by means of a laser power density adjusting unit of the processing machine, for a second laser processing tool (5b-5d, 7) in order to carry out a second processing, wherein the second laser processing tool is connected to the interface (4) and is then supplied by the laser source (1) with laser energy with a laser power density adjusted for the second processing,
carrying out the second processing with the second laser processing tool (5b-5d, 7), wherein the second processing differs from the first processing,
wherein the first processing is selected from a processing involving cutting, drilling or end trimming, and the second processing involves the activation of a bonding agent.

2. Method according to claim 1, **characterised in that** the first processing and the second processing are carried out on an identical workpiece.

3. Method according to one of the preceding claims, **characterised in that** the adjustment of the laser power density comprises a changing of the optical parameters, in particular focussing.

4. Method according to one of the preceding claims, **characterised in that**, following completion of the first processing, the first laser processing tool (5a) is removed from the interface (4) and the second laser processing tool (5b-5d) is fitted into the interface.

5. Processing machine for carrying out the method according to one of the preceding claims, wherein the processing machine comprises:
a workpiece support to receive and optionally hold, in particular also to transport, workpieces during the processing,
an interface (4, 6) which is configured to receive a first or second laser processing tool, as well as a first or second laser processing tool fitted thereon, a laser source (1) as well as a laser guidance path (2) for guiding the laser energy provided by the laser source from the laser source to the first or second laser processing tool (5a, 7),
wherein the processing machine has a laser power density adjustment unit allowing adjustment of the laser power density for the first or second laser processing tool made available for the processing,
wherein the first laser processing tool is configured for a processing involving cutting, drilling or end trimming, and the second laser processing tool is configured for activation of a bonding agent.

6. Processing machine according to claim 5, further comprising a guide device, in particular a portal or a boom, wherein the interface (4, 6) is attached to the guide device, in particular the portal or boom.

7. Processing machine according to one of the claims 5-6, **characterised in that** the laser source is a diode laser, fibre laser, solid state laser, in particular Nd-YAG laser or gas laser, in particular a CO2 laser.

8. Processing machine according to one of the claims 5-7, **characterised in that** the laser guidance path (2) comprises a beam switch (3) and/or beam splitter (3) with which the laser beam can be guided via different laser guidance path arms (2a, 2b) to different interfaces (4, 6).

9. Processing machine according to one of the claims 5-8, **characterised in that** the interface receives a laser cutting unit, a unit for preparing a coating material, a laser drilling unit, a laser welding unit or a laser end trimming unit.

10. Processing machine according to claim 9, **characterised in that** the unit can be fitted interchangeably to the interface.

11. Processing machine according to one of the claims 5-10, **characterised in that** the processing machine comprises a unit, in particular a multiple-axis unit, with a machining tool, in particular a milling tool or drill.

12. Processing machine according to one of the preceding claims, **characterised in that** the workpiece support comprises a vacuum suction unit or a belt or roller conveyor.

## Revendications

1. Procédé d'usinage en particulier de pièces en forme de panneaux ou de barres qui consistent par exemple en du bois, des matériaux en bois, une matière plastique ou similaires, avec une machine à usiner, lequel procédé comprend les étapes consistant à :
usiner une pièce avec un premier outil d'usinage par laser (5a) logé dans une interface (4) de la machine à usiner, l'énergie laser étant guidée à partir d'une source laser (1) de la machine à usiner vers le premier outil d'usinage par laser pour un premier usinage ; puis
régler la densité de puissance laser de la source laser (1) au moyen d'une unité de réglage de la densité de puissance laser de la machine à usiner pour un second outil d'usinage par laser (5b-5d, 7) destiné à effectuer un second usinage, dans lequel le second outil d'usinage par laser est relié à l'interface (4) et est ensuite alimenté en énergie laser par la source laser (1) avec une densité de puissance laser réglée pour le second usinage,
réaliser le second usinage avec le second outil d'usinage laser (5b-5d, 7), dans lequel le second usinage est différent du premier usinage, dans lequel le premier usinage est sélectionné parmi un usinage de coupe, un usinage de perçage et un usinage de recouvrement, et le second usinage est une activation d'un adhésif.

2. Procédé selon la revendication 1, **caractérisé en ce que** le premier usinage et le second usinage sont réalisés sur une même pièce.

3. Procédé selon l'une quelconque des revendications précédentes, **caractérisé en ce que** le réglage de la densité de puissance laser comprend une modification des paramètres optiques, en particulier la focalisation.

4. Procédé selon l'une quelconque des revendications précédentes, **caractérisé en ce qu'**après l'achèvement du premier usinage, le premier outil d'usinage par laser (5a) est retiré de l'interface (4) et le second outil d'usinage par laser (5b-5d) est échangé dans l'interface.

5. Machine à usiner pour la mise en œuvre du procédé selon l'une quelconque des revendications précédentes, dans laquelle la machine à usiner présente :
un support de pièce pour la réception et, le cas échéant, le maintien, en particulier également pour le transport des pièces pendant l'usinage,
une interface (4, 6) configurée pour recevoir un premier ou un second outil d'usinage par laser, ainsi qu'un premier ou second outil d'usinage par laser y étant reçu,
une source laser (1) ainsi qu'un chemin de guidage laser (2) pour guider l'énergie laser fournie par la source laser à partir de la source laser jusqu'au premier ou second outil d'usinage par laser (5a, 7),
dans laquelle
la machine à usiner comprend une unité de réglage de la densité de puissance laser pour régler la densité de puissance laser disponible pour l'usinage pour le premier ou le second outil d'usinage par laser, dans laquelle le premier outil d'usinage par laser est configuré pour un usinage de coupe, un usinage de perçage ou un usinage de recouvrement, et le second outil d'usinage par laser est configuré pour l'activation d'un adhésif.

6. Machine à usiner selon la revendication 5, comprenant en outre un dispositif de guidage, en particulier un portail ou une flèche, dans laquelle l'interface (4, 6) est placée sur le dispositif de guidage, en particulier sur le portail ou la flèche.

7. Machine à usiner selon l'une quelconque des revendications 5 à 6, **caractérisée en ce que** la source laser est un laser à diode, un laser à fibre, un laser à solide, en particulier un laser Nd-YAG ou un laser à gaz, en particulier un laser CO2.

8. Machine à usiner selon l'une quelconque des revendications 5 à 7, **caractérisée en ce que** le chemin de guidage laser (2) présente un commutateur de faisceau (3) et/ou un séparateur de faisceau (3) avec lequel le faisceau laser peut être guidé par l'intermédiaire de différents bras du chemin de guidage laser (2a, 2b) vers différentes interfaces (4, 6).

9. Machine à usiner selon l'une quelconque des revendications 5 à 8, **caractérisée en ce que** l'interface reçoit une unité de coupe au laser, une unité de préparation d'un matériau de revêtement, une unité de perçage au laser, une unité de soudage au laser ou une unité de coupe en bout au laser.

10. Machine à usiner selon la revendication 9, **caractérisée en ce que** l'unité peut être échangée dans l'interface.

11. Machine à usiner selon l'une quelconque des revendications 5 à 10, **caractérisée en ce que** la machine à usiner comprend une unité, en particulier une unité multiaxes, avec un outil d'usinage par enlèvement de copeaux, en particulier une fraise ou un foret.

12. Machine à usiner selon l'une quelconque des revendications précédentes, **caractérisée en ce que** le support de pièce comprend des ventouses ou un convoyeur à bande ou à rouleaux.
